(19) Europäisches Patentamt / European Patent Office / Office européen des brevets

(11) **EP 2 805 900 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(51) Int Cl.:
***B65G 43/10*** *(2006.01)*

(21) Anmeldenummer: **14162551.7**

(22) Anmeldetag: **31.03.2014**

(54) **Überwachung und Steuerung einer Transportvorrichtung für Behälter**

Monitoring and control of a transport device for containers

Surveillance et commande d'un dispositif de transport pour récipients

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2013 DE 102013209362**

(43) Veröffentlichungstag der Anmeldung:
**26.11.2014 Patentblatt 2014/48**

(73) Patentinhaber: **Krones AG**
**93073 Neutraubling (DE)**

(72) Erfinder:
• **Fleischmann, Bernd**
**93073 Neutraubling, DE (DE)**
• **Seger, Martin**
**93073 Neutraubling, DE (DE)**

(74) Vertreter: **Grünecker Patent- und Rechtsanwälte PartG mbB**
**Leopoldstraße 4**
**80802 München (DE)**

(56) Entgegenhaltungen:
EP-A2- 0 270 133    DE-A1- 3 313 030
US-A- 3 987 429    US-A- 4 895 643

EP 2 805 900 B1

# Beschreibung

Die vorliegende Erfindung betrifft ein Verfahren nach dem Oberbegriff des Anspruchs 1 zur Überwachung und Steuerung eines Belegungsgrades einer Transportstrecke zum Transportieren von Behältern beispielsweise in einer Abfüllanlage mit mehreren individuell geschwindigkeitsregelbaren aneinander anschließenden Teilstrecken. Insbesondere betrifft die vorliegende Erfindung ein Verfahren, bei dem eine Behälterbelegung über einen bestimmten Bereich an einem Einlaufbereich der Transportstrecke erfasst wird.

Beispielsweise enthält in der Getränkeindustrie eine Abfüllanlage eine Vielzahl von Behälterbehandlungsvorrichtungen, die durch Transporteure miteinander verbunden sind auf denen Behälter zwischen den Behälterbehandlungsvorrichtungen transportiert werden. Typischerweise bestehen solche Transportstrecken aus einer Reihe von aneinander anschließenden Teilstrecken, in denen Behälter beschleunigt, gepuffert, vereinzelt oder von einer einspurigen Strecke in eine mehrspurigen Strecke aufgeteilt werden können. Um einen reibungslosen und effizienten Transport der Behälter auf der Transportstrecke zu gewährleisten, wird die Transportstrecke in der Regel durch Sensoren überwacht.

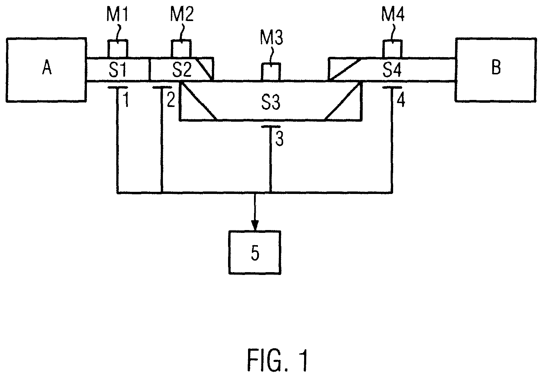

Figur 1 zeigt schematisch eine Transportstrecke zwischen zwei Behälterbehandlungsvorrichtungen A und B mit den Teilstrecken S1, S2, S3 und S4. Die Geschwindigkeiten der Teilstrecken S1, S2, S3 und S4 können individuell über zugeordnete Motoren M1, M2, M3 und M4 gesteuert werden. Beispielsweise kann auf den Strecken S1 und S2 der Behälterstrom verlangsamt werden. Die Teilstrecke S3 dient als Pufferstrecke, in der der Behälterstrom aufgestaut werden kann, um beispielsweise Störungen abzupuffern. Auf der Teilstrecke S4 wird der parallele Behälterstrom aus der Teilstrecke S3 wieder vereinzelt und der Behälterbehandlungsvorrichtung B zugeführt. Mit Sensoren 1, 2, 3 und 4 wird die Belegung der Teilstrecken S1, S2, S3 und S4 erfasst und einer Rechnereinheit 5 zugeführt. Mit der Rechnereinheit 5 werden dann die Sensordaten ausgewertet und die Geschwindigkeiten der Teilstrecken S1, S2, S3 und S4 über die Motoren M1, M2, M3 und M4 gesteuert.

Eine solche Überwachung und Steuerung eines Transporteurs wird beispielsweise in der EP-A-0071955 beschrieben. Dieser Stand der Technik offenbart ein Verfahren zur kontinuierlichen Transportsgeschwindigkeitsregelung von Transporteuren. Die EP-A-0071955 schlägt für jeden Teilabschnitt einen Sensor vor, der die Anzahl der Flaschen und deren geometrische Verteilung erfasst, um ein Flaschenverfolgungsverfahren zu realisieren, das verwendet wird um die Transportgeschwindigkeit des Transporteurs so zu regeln, dass ein hoher Durchsatz bei minimalem Staudruck erreicht wird.

Ein ähnliches Beispiel wird in der EP-A-0066119 gezeigt.

Die EP-A-0190090 beschreibt eine Vorrichtung zum drucklosen Ausrichten von Behältern, bei der Behälter auf einer mehrspurigen Förderstrecke in eine einspurige Förderstrecke eingeschleust werden. Zur Geschwindigkeitsregelung der Förderstrecken werden zwei Sensoren verwendet. Ein erster Sensor erfasst auf der mehrspurigen Förderstrecke die Behälterbelegung mittels einer Kamera und ein zweiter Sensor erfasst die Behälterbelegung auf der einspurigen Strecke.

Mit den aus dem Stand der Technik bekannten Verfahren zur Überwachung und Steuerung eines Belegungsgrades einer Transportstrecke ist eine Behälterverfolgung nur mit einer Vielzahl von Sensoren möglich. Beispielsweise verwenden die EP-A-0071955 und die EP-A-0066119 vier oder mehr Sensoren. Ein weiterer Nachteil dieses Standes der Technik ist, dass der Zustand zwischen den Sensoren nicht erfasst wird und somit eine Abbildung der Gesamtbelegung einer Förderstrecke in Echtzeit nicht möglich ist. Darüber hinaus ergibt sich durch die vielen Sensoren ein großer Materialaufwand durch die Sensoren selber und die entsprechende Verkabelung, das heißt die notwendigen Verbindungen zu einem Zentralrechner bzw. einer zentralen Steuereinheit, wodurch auch die Fehleranfälligkeit vergrößert wird. Im Stand der Technik Dokument EP-A-0190090, in dem zwei Sensoren verwendet werden, ein Sensor am Anfang der Transportstrecke und ein Sensor am Ende der Transportstrecke, ist eine Behälterverfolgung nicht vorgesehen und auch nicht möglich. Auch in diesem Stand der Technik ist eine Abbildung der Belegung auf der ganzen Transportstrecke in Echtzeit nicht möglich.

Die Patentanmeldeschrift DE 3313030 A1 betrifft ein Verfahren nach dem Oberbegriff des Anspruchs 1 und eine Vorrichtung zum Erfassen des Belegungszustandes eines einreihigen Förderers für Gefäße oder dergleichen. In ideser Patentanmeldeschrift wird offenbart, dass an einem bestimmten Punkt eines einreihigen Förderers für Gefäße fortlaufend die Durchlaufzeiten von belegten und unbelegten Teilstrecken mittels einer ortsfesten Lichtschranke ermittelt werden und in einem Schieberegister für eine bestimmte Zeit gespeichert werden. Mittels einer Auswertungseinrichtung wird aus dem momentanen Inhalt des Schieberegisters ein variabler Kennwert für den Belegungszustand des Förderers ermittelt.

Es ist deshalb eine Aufgabe der vorliegenden Erfindung, ein Verfahren zur Überwachung und Steuerung eines Belegungsgrades einer Transportstrecke mit möglichst geringem Aufwand bereitzustellen, und das in der Lage ist die Behälter auf einen Transporteur in Echtzeit nach zu verfolgen und die Belegung der gesamten Transportstrecke in Echtzeit abzubilden, so dass eine effiziente Steuerung des Behältertransports ermöglicht wird. Als Recheneinheit dient dabei vorzugsweise eine speicherprogrammierbare Steuerung (SPS).

Die Aufgabe wird durch ein Verfahren gemäß Anspruch 1 gelöst. Das Verfahren beinhaltet eine Simulation des Behälterstroms in Echtzeit unter Verwendung der erfassten Behälterbelegung im Einlaufbereich der Transportstrecke und einer Transportgeschwindigkeit wobei die Simulation folgendes umfasst: Eintragen des erfassten Wertes für die Behälterbelegung in ein Schieberegister; und Synchronisieren eines Schieberegistertaktes mit der Transportgeschwindigkeit, so dass der Schieberegisterinhalt die Behälterbelegung auf der Förderstrecke abbildet. Da der Schieberegistertakt synchron zur Transportgeschwindigkeit ist, wird auch jede Änderung der Belegung in Echtzeit in dem Schieberegister abgebildet. Dadurch lässt sich der Behälterdurchsatz auf einfache Weise effizienter Regeln, insbesondere bei einer Vielzahl von hintereinander angeordneten Teilstrecken.

Weiterhin umfasst das Schieberegister eine Vielzahl von unterschiedlich taktbaren Schieberegistern entsprechend der Anzahl der Teilstrecken, wobei die Takte der unterschiedlich taktbaren Schieberegister mit den Transportgeschwindigkeiten der Teilstrecken synchronisiert werden. Ein Zahlenwert für die Behälterbelegung an einem Überschub zwischen zwei angrenzenden Transportteilstrecken wird auf ein nachfolgendes Schieberegister übertragen, das der anschließenden Teilstrecke der Transportstrecke zugeordnet ist. Dadurch können die Schieberegister so zusammen geschaltet werden, dass sie Transportstrecken mit einer Vielzahl von individuell geschwindigkeitsgeregelten Teilstrecken und einen Überschub von einer Teilstrecke auf eine anschließende Teilstrecke simulieren bzw. abbilden können..

In einer Ausführungsform wird dem Schieberegistertakt abhängig von der Transportgeschwindigkeit eine bestimmte Wegstrecke auf der Transportstrecke bzw. der Transportteilstrecke zugeordnet. Damit entspricht jeder Registerinhalt der Belegung eines bestimmten Abschnittes auf der Transportstrecke. Entsprechend kann eine Gesamtbehälterbelegung der gesamten Transportstrecke, eine Behälterdichte für bestimmte Bereiche der Transportstrecke und/oder Behälterabstände für bestimmte Abschnitte bzw. eine mittlere Behälterdichte für die gesamte Transportstrecke berechnet werden. Unter Hinzuziehung der Transportgeschwindigkeiten der Teilstrecken kann aus dem Schieberegisterinhalt ein Behälterdurchsatz berechnet werden. Somit können die Transportgeschwindigkeiten der Teilstrecken so geregelt werden, dass ein vorgegebener Behälterdurchsatz, eine vorgegebene Behälterbelegung und/oder ein vorgegebener Behälterabstand erreicht werden. Erfindungsgemäß wird eine virtuelle Abbildung einer Behälterbelegung an einem Überschub zwischen zwei angrenzenden Transportteilstrecken berechnet werden durch Berechnen einer virtuellen Position und einer Ankunftszeit eines oder mehrerer Behälter an dem Überschub. Die virtuelle Abbildung wird in Form eines Registerinhalts, d.h. eines Zahlenwertes für die Behälterbelegung am Überschub auf ein nachfolgendes Schieberegister, das der anschließenden Teilstrecke der Transportstrecke zugeordnet ist, übertragen. Durch dieses Verfahren wird die Übertragung von Behältern an einem Überschub zwischen zwei angrenzenden Transportstrecken simuliert. Insbesondere kann dadurch der Überschub zwischen zwei Transportstrecken mit unterschiedlichen Geschwindigkeiten simuliert werden. Die Information dient zur Regelung der Transportgeschwindigkeiten der Teilstrecken, so dass eine schonende Übernahme von einer Teilstrecke auf nachfolgende Teilstrecken/Einzelstrecken ermöglicht wird. Ebenso können die Transportgeschwindigkeiten so gesteuert werden, dass die Behälter schonend aufgestaut werden können oder dass schonend Lücken gefüllt werden können, das heißt möglichst geräuscharm und ohne Beschädigung der Behälter, beispielsweise Flaschen.

Die Simulation des Überschubs kann beispielsweise realisiert werden, indem beim Übertrag einer letzten Speicherzelle eines vorangegangenen Schieberegisters dessen Speicherinhalt zu dem Speicherinhalt einer ersten Speicherzelle eines anschließenden Schieberegisters addiert wird, um einen Überschub von einer Teilstrecke auf eine anschließende Teilstrecke zu simulieren.

Die Registerinhalte aller Speicherzellen aller Schieberegister können verwendet werden, um die Belegung der Transportstrecke und/oder deren zeitliche Veränderung zu visualisieren, beispielsweise durch Ausgabe der Daten in den Registern des Schieberegisters auf einen Monitor, beispielsweise in Form einer sich dynamisch ändernden Grafik.

Die Schieberegisterinhalte können auch zur Simulation eines virtuellen Staudruckschalters verwendet werden. Dadurch kann auf alle Staudruckschalter verzichtet werden, wodurch Material und Wartungsaufwand reduziert werden. Beispielsweise kann aus einer Behälterdichte und den Transportgeschwindigkeiten der entsprechenden Teilstrecke sowie der angrenzenden Teilstrecken für eine bestimmte Speicherzelle, die einem bestimmten Ort auf der Transportstrecke entspricht, ein virtueller Staudruck berechnet werden.

In einer Ausführungsform kann der virtuelle Staudruckschalter die Transportgeschwindigkeit von einer oder mehreren Teilstrecken direkt oder über eine zentrale Steuereinheit so verändern, dass die Belegungsdichte bzw. der virtuelle Staudruck gemäß einer bestimmten Speicherzelle eines Schieberegisters unter einen vorbestimmten Wert fällt. Damit lässt sich die Transportstrecke beispielsweise auf minimalen Staudruck oder auch minimale Geräusche regeln.

Um Fehler in der Anlage bzw. in der Elektronik zu erfassen, beziehungsweise einen geschlossenen Regelkreis zu realisieren, kann die Behälterbelegung zusätzlich auch über einen bestimmten Bereich an einem Auslaufbereich der Transportstrecke erfasst werden.

In einer Ausführungsform wird die Behälterbelegung am Einlaufbereich der Transportstrecke zyklisch über eine Strecke erfasst, die dem Schieberegistertakt entspricht. Damit wird in jedem Schieberegistertakt ein neuer Wert für die Behälterbelegung in das Scheiberegister eingespeist, so dass eine lückenlose Abbildung der transportierten Behälter erfolgt.

Alternativ kann auch die Behälterbelegung kontinuierlich erfasst werden und der kontinuierliche Datenstrom wird entsprechend dem Schieberegistertakt in Teildatenpakete aufgeteilt und dem Schieberegister zugeführt. Es ist auch möglich, Erfassungszyklen zu verwenden, die kürzer sind als der Schieberegistertakt. In diesem Fall kann eine Behälterzahl über mehrere Erfassungszyklen aufsummiert werden, oder es wird ein Mittelwert aus mehreren Behälterdichtewerten gebildet, um eine Belegungsdichte für eine gewünschte Strecke, die dem Schieberegistertakt entspricht, zu erhalten.

Die Behälterbelegung kann beispielsweise mit einer Kamera erfasst werden, die es auch ermöglicht, mehrspurige Behälterströme zu erfassen. Vorteilhaft erfolgt die Auswertung des Belegungsgrades mittels einer 3D-Kamera, da eine Konturerkennung weniger anfällig für Fremdlicht ist. Ebenso erfordert eine herkömmliche Kamera eine Grauwerterkennung, die immer Probleme mit den verschieden möglichen Farbkontrasten hat. Besonders vorteilhaft bietet sich eine Stereokamera an, welche zwei Objektive mit beispielsweise einem räumlichen Abstand zwischen 40 mm und 150 mm hat und jeweils zwei Halbbilder zeitsynchron aufnimmt. Im Fall einer einspurigen Teilstrecke kann auch mit einer Lichtschranke die Behälterbelegung erfasst werden, wodurch der apparative Aufwand reduziert werden kann.

Im Folgenden werden Ausführungsbeispiele, Weiterbildungen, Vorteile und Anwendungsmöglichkeiten der Erfindung anhand der beigefügten Figuren näher erläutert. Dabei sind alle beschriebenen und/oder bildlich dargestellten Merkmale für sich oder in beliebiger Kombination Gegenstand der Erfindung, soweit sie den durch die Ansprüche definierten Schutzbereich nicht überschreiten. Auch wird der Inhalt der Ansprüche zu einem Bestandteil der Beschreibung gemacht. In den Figuren zeigen:

Figur 1      schematisch eine Transportvorrichtung für Behälter mit mehreren Sensoren gemäß dem Stand der Technik;

Figur 2      schematisch eine Transportvorrichtung, mit der das Verfahren gemäß der vorliegenden Erfindung durchgeführt wird; und

Figur 3      ein Blockschaltbild einer Transportvorrichtung für Behälter mit n-Teilstrecken.

Die vorliegende Erfindung erfolgte, um mit geringerem Aufwand als im Stand der Technik eine Belegung einer Transportvorrichtung für Behälter zu überwachen, um den Transporteur zu steuern, um Störungen zu erkennen und um Störungen entgegen zu wirken.

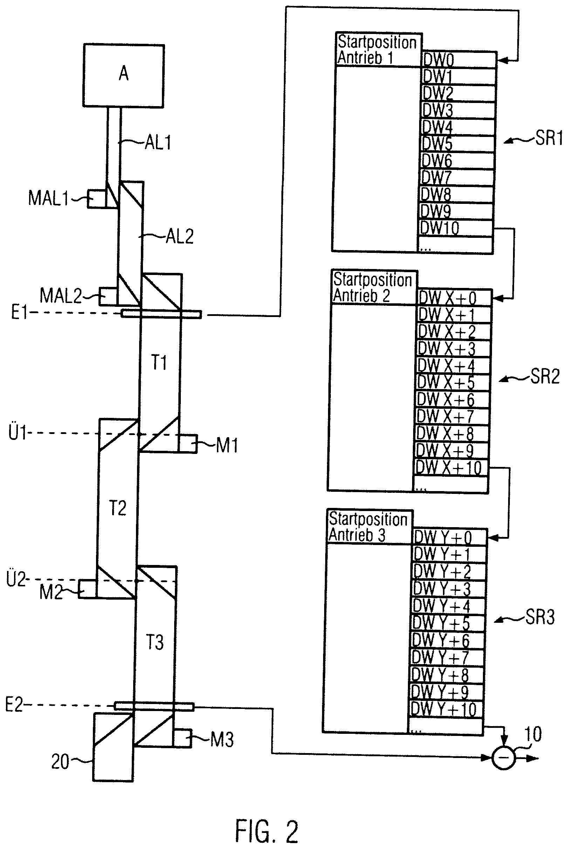

Figur 2 zeigt schematisch eine typische Anordnung einer Transportvorrichtung, mit der das erfinderische Verfahren durchgeführt werden kann. Das Bezugszeichen A bezeichnet eine Behälterbehandlungseinrichtung, die einen kontinuierlichen Strom von behandelten Behältern ausstößt, der in eine Transportstrecke eingespeist wird. In Figur 2 ist beispielhaft eine Transportstrecke mit den Teilstrecken AL1, AL2, T1, T2 und T3 gezeigt, um das Prinzip zu veranschaulichen. Die Transportstrecke kann jedoch aus beliebigen Teilstrecken aufgebaut sein. Die Teilstrecken AL1, AL2, T1, T2 und T3 werden unabhängig voneinander mit Motoren M1, M2, M3, M4 und M5 mit individuellen Geschwindigkeiten angetrieben. Die Teilstrecken AL1 und AL2 dienen in dem Beispiel von Figur 2 dazu, den einzelspurigen Auslauf der Maschine A auf einen mehrspurigen Auslauf aufzuweiten. Die anschließende Transportstrecke T1, T2 und T3 dient dann beispielsweise der Beschleunigung, Pufferung und/oder der Abbremsung der Behälter bevor sie in eine nachfolgende Behälterbehandlungsvorrichtung (nicht gezeigt) eingespeist werden.

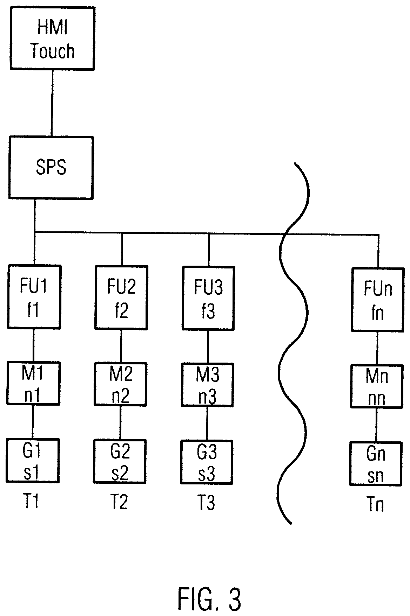

Figur 3 zeigt ein Blockschaltbild mit den funktionellen Einheiten einer Transportstrecke mit n-Teilstrecken T1, T2, T3 ... Tn, wobei die Teilstrecken T1, T2 und T3 den Teilstrecken T1, T2 und T3 aus der Figur 2 entsprechen können. Jede Teilstrecke umfasst einen Frequenzumformer FU1, FU2, FU3 ... FUn, einen Motor M1, M2, M3 ... Mn und ein Getriebe G1, G2, G3 ... Gn. Der Frequenzumformer FU empfängt Steuersignale einer speicherprogrammierbaren Steuerung (SPS) und erzeugt ein Motorsteuersignal mit einer bestimmten Frequenz f1, f2, f3 ... fn, das dem jeweiligen zugeordneten Motor M1, M2, M3 ... Mn zugeführt wird. Der Motor dreht sich dann entsprechend der Frequenz mit einer entsprechenden Antriebsdrehzahl n1, n2, n3 ... nn. An jedem Motor sitzt ein Getriebe G1, G2, G3 ... Gn, das die Drehbewegung des Motors in eine lineare Bewegung der Transporteilstrecke T1, T2, T3 ... Tn umwandelt.

Wenn $f_n$ die Frequenz des Motorsteuersignals für die Teilstrecke $T_n$ ist, $P_n$ die Polpaarzahl des Motors $M_n$ ist, $Z_n$ die Anzahl der Zähne am Kettenrad für die Teilstrecke $T_n$ ist, $K_n$ der Kettengliedabstand pro Zahneingriff für die Teilstrecke $T_n$ ist und $I_n$ die Getriebeübersetzung ist, dann ergibt sich die Fördergeschwindigkeit für die Teilstrecke $T_n$ zu:

$$S_n = f_n \times 60 \times Z_n \times K_n / P_n \times I_n$$

Beispielsweise führt eine Frequenz $f_n$ von 14,58 min$^{-1}$, eine Polpaarzahl $P_n$ von 1, eine Anzahl $Z_n$ der Zähne am Kettenrad von 18, ein Kettengliedabstand $K_n$ von 1 Zoll (2,54 cm) und eine Getriebeübersetzung $I_n$ von 40 zu einer Bandgeschwindigkeit $S_n$ von ca. 10 m/min.

Zurück zu Figur 2 bezeichnet das Bezugszeichen E1 einen Bereich in dem durch einen Sensor, beispielsweise eine Kamera oder eine Lichtschranke eine Bandbelegung der Transportteilstrecke T1 erfasst wird. Der Wert, der sich daraus ergibt, wird in die erste Speicherzelle DW0 eines Schieberegisters SR1 eingespeist. Ein am Schieberegister anliegendes Taktsignal veranlasst, dass jeder Schieberegisterinhalt beispielsweise bei einer ansteigenden Flanke eines Taktsignals in die nächste Zelle verschoben wird. Wenn das Taktsignal des Schieberegisters mit der Bandgeschwindigkeit, beispielsweise der Transporteilstrecke T1 synchronisiert wird, entspricht der Inhalt eines Registers in dem Schieberegister SR1 einer Bandbelegung eines bestimmten Ortes auf der Transportteilstrecke T1. Die Taktlänge des Taktsignals entspricht dann einer bestimmten Wegstrecke auf der Transportteilstrecke T1

Im oben genannten Zahlenbeispiel entspricht eine Frequenz $f_1$ des Motorsteuersignals von 14,58 $min^{-1}$einer Bandgeschwindigkeit $S_1$ von 10 m/min. Soll der Inhalt einer Speicherzelle des Schieberegisters eine Bandbelegung von 10 cm Länge abbilden muss alle 0,01 Minuten ein Schieberegistertakt ausgelöst werden, d.h. alle 600 ms. Wird beispielsweise ein Systemtakt von 100 ms verwendet muss jede sechste Periode des Systemtaktes ein Triggersignal als Schieberegistertaktsignal ausgegeben werden. Das heißt, alle 600 ms bewegt sich das Band um 10 cm weiter. Wird die Bandbelegung an der Stelle E1 auf einer Länge von 10 cm alle 600 ms gemessen und wird jede Messung bei einem Schieberegistertakt von 600 ms (entspricht 1,66 Hz) in das Schieberegister SR1 eingespeist, entspricht zu jedem Zeitpunkt ein bestimmter Registerinhalt des Schieberegisters SR1 einer Bandbelegung über eine Strecke von 10 cm an einer festgelegten Stelle der Teiltransportstrecke T1. Bei Veränderung der Fördergeschwindigkeit muss entsprechend das Schieberegistertaktsignal mit verändert werden.

Alternativ dazu kann der Schieberegistertakt von der Frequenz $f_1$ des Motorsteuersignals abgeleitet werden, das an dem Motor M1 der Teilstrecke T1 anliegt. Beispielsweise kann die Frequenz $f_1$, die mit einem Multiplikator multipliziert wurde, als Schieberegistertakt verwendet werden. Damit wird der Schieberegistertakt automatisch an die Fördergeschwindigkeit angepasst.

Schließt sich an eine Teilstrecke eine weitere Teilstrecke T2 mit gleicher Förderbreite an, beispielsweise zur Pufferung, wobei die anschließende Teilstrecke T2 eine andere Fördergeschwindigkeit aufweist, kann die Förderbandbewegung simuliert werden, in dem der zweiten Teilstrecke T2 ein zweites Schieberegister SR2 zugeordnet wird mit einem Schieberegistertakt, der mit der Fördergeschwindigkeit der zweiten Teilstrecke T2 synchronisiert ist. Der Überschub Ü1 von der Teilstrecke T1 zur Teilstrecke T2 wird simuliert durch Übertragung des Registerinhaltes des letzten Registers DW10 im ersten Schieberegister SR1 auf das erste Register DWX+0 im nachfolgenden Schieberegister SR2. Dabei werden die Registerinhalte der Register DW10 und DWX+0 addiert. Ist die Bandgeschwindigkeit der zweiten Teilstrecke T2 größer als die Bandgeschwindigkeit der ersten Teilstrecke T1, ist der Registerinhalt des ersten Registers DWX+0 im Schieberegister SR2 null, so dass sich die mittlere Belegungsdichte über mehrere Registerzellen bzw. 10 cm Bandabschnitte verkleinert. Ist die Geschwindigkeit in der zweiten Teilstrecke T2 kleiner als in der ersten Teilstrecke T1, befindet sich noch ein Inhalt in dem ersten Register DWX+0 und die Belegungsdichte erhöht sich. Es findet ein Überlauf statt, der abhängig ist von der Förderbreite. Der Überlauf verbleibt dann bei der nächsten Taktung wieder in dem ersten Register DWX+0. Bei einer veränderten Förderbreite T2 wird der Überlauf in den Schieberegistern entsprechend korrigiert.

Ist auf einem Teilabschnitt die Behältergeschwindigkeit kleiner als die Bandgeschwindigkeit, findet ebenfalls ein rückwirkender Überlauf in den Registerzellen statt. Dabei wird sukzessive von der Registerzellen DWXn auf DWXn-1 gerechnet.

Bei mehr als zwei Teilstrecken, beispielsweise einer zusätzlichen Teilstrecke T3 erhöht sich entsprechend die Anzahl der Schieberegister. In Figur 2 zeigt beispielsweise zusätzlich das dritte Schieberegister SR3 entsprechend der Teilstrecke T3.

Optional kann in einem Auslaufbereich der Transportstrecke E2 eine weitere Messung, beispielsweise mit einer CCD-Kamera oder 3D-Kamera durchgeführt werden. Der sich ergebende Messwert kann mit dem Registerinhalt des letzten Registers DWY+10 des letzten Schieberegisters SR3 verglichen werden, beispielsweise durch eine Subtraktion 10. Ist die Differenz ungleich 0, kann eine Störung vorliegen und entsprechende Maßnahmen eingeleitet werden.

Die Kamera kann auch Messungen im Systemtakt durchführen, das heißt gemäß dem vorher verwendeten Zahlenbeispiel kann eine Messung alle 100 ms durchgeführt werden. Der in die Registerzelle DW0 eingespeiste Wert wird dann durch Addition beziehungsweise Mittelwertbildung aus 6 Messungen gemäß dem Schieberegistertakt ermittelt.

**Patentansprüche**

1. Verfahren zur Überwachung und Steuerung eines Belegungsgrades einer Transportstrecke in einer Abfüllanlage, das Folgendes umfasst:

Erfassen einer Behälterbelegung über einen bestimmten Bereich an einem Einlaufbereich (E1) der Transportstrecke;
Simulation eines Behälterstroms in Echtzeit unter Verwendung der erfassten Behälterbelegung im Einlaufbereich der Transportstrecke und einer Transportgeschwindigkeit, wobei die Simulation folgendes umfasst:

Eintragen des erfassten Wertes für die Behälterbelegung in ein Schieberegister (SR1); und
Synchronisieren eines Schieberegistertaktes mit der Transportgeschwindigkeit, so dass der Schieberegisterinhalt (DW0, DW1, ...) die Behälterbelegung auf der Transportstrecke abbildet,

wobei das Schieberegister eine Vielzahl von unterschiedlich taktbaren Schieberegistern (SR1, SR2, SR3) entsprechend der Anzahl der Teilstrecken (T1, T2, T3) umfasst, und wobei die Takte der unterschiedlich taktbaren Schieberegister (SR1, SR2, SR3) mit den Transportgeschwindigkeiten der Teilstrecken (T1, T2, T3) synchronisiert werden; **dadurch gekennzeichnet, dass** die Transportstrecke mehrere individuell geschwindigkeitsregelbare aneinander anschließende Teilstrecken (T1, T2, T3) umfasst,

wobei das Verfahren weiterhin umfasst:

Berechnen einer virtuellen Abbildung einer Behälterbelegung an einem Überschub (Ü1, Ü2) zwischen zwei angrenzenden Teilstrecken durch Berechnen einer virtuellen Position und einer Ankunftszeit eines oder mehrerer Behälter an dem Überschub (Ü1, Ü2), und Übertragen der virtuellen Abbildung am Überschub (Ü1, Ü2) auf ein nachfolgendes Schieberegister der anschließenden Teilstrecke der Transportstrecke.

2. Verfahren nach Anspruch 1, wobei die Simulation weiterhin folgendes umfasst:

Zuordnen einer Wegstrecke auf der Transportteilstrecke (T1, T2, T3) dem Schieberegistertakt abhängig von der Transportgeschwindigkeit.

3. Verfahren nach Anspruch 1 oder 2, wobei aus dem Schieberegisterinhalt (DW0, DW1, ...) eine Behälterbelegung und/oder ein Behälterabstand berechnet werden.

4. Verfahren nach einem der Ansprüche 1 - 3, wobei aus dem Schieberegisterinhalt (DW0, DW1, ...) und den Transportgeschwindigkeiten der Teilstrecken ein Behälterdurchsatz berechnet wird.

5. Verfahren nach einem der Ansprüche 1 - 4, wobei die Transportgeschwindigkeiten der Teilstrecken (T1, T2, T3) so geregelten werden, dass ein vorgegebener Behälterdurchsatz, eine vorgegebene Behälterbelegung und/oder ein vorgegebener Behälterabstand erreicht werden.

6. Verfahren nach Anspruch 1, wobei bei einem Übertrag einer letzten Speicherzelle (DW10) eines vorangegangenen Schieberegisters (SWR1) dessen Speicherinhalt zu dem Speicherinhalt einer ersten Speicherzelle (DWX+0) eines anschließenden Schieberegisters (SWR2) addiert wird, um einen Überschub von einer Teilstrecke (T1) auf eine anschließende Teilstrecke (T2) zu simulieren.

7. Verfahren nach einem der Ansprüche 1 - 6, das weiterhin die Visualisierung der Belegung der Transportstrecke und/der deren zeitliche Veränderung umfasst.

8. Verfahren nach einem der Ansprüche 1 - 7, das weiterhin die Simulation eines virtuellen Staudruckschalters umfasst, wobei aus einer Behälterdichte und den Transportgeschwindigkeiten der entsprechenden Teilstrecke sowie der angrenzenden Teilstrecken für eine bestimmte Speicherzelle, die einem bestimmten Ort auf der Transportstrecke entspricht, ein virtueller Staudruck berechnet wird.

9. Verfahren nach Anspruch 8, wobei der virtuellen Staudruckschalter die Transportgeschwindigkeit von einer oder mehreren Teilstrecken so verändert, dass die Belegungsdichte entsprechend einer vorbestimmten Speicherzelle eines Schieberegisters unter einen vorbestimmten Wert fällt.

10. Verfahren nach einem der Ansprüche 1 - 9, das weiterhin umfasst: Erfassen der Behälterbelegung über einen bestimmten Bereich an einem Auslaufbereich (E2) der Transportstrecke, der vorzugsweise frei wählbar ist.

11. Verfahren nach einem der Ansprüche 1 - 10, wobei das Erfassen der Behälterbelegung folgendes umfasst:

zyklisches Erfassen der Behälterbelegung am Einlaufbereich der Transportstrecke über eine Wegstrecke, die dem Schieberegistertakt entspricht.

12. Verfahren nach Anspruch 11, wobei die Behälterbelegung mit einer Kamera erfasst wird.

13. Verfahren nach Anspruch 11, wobei die Behälterbelegung auf einer einspurigen Teilstrecke mit einer Lichtschranke erfasst wird.

**Claims**

1. A method for monitoring and controlling a loading rate of a transport section in a filling line, comprising:

detecting a container loading over a certain region at an incoming region (E1) of said transport section;
a simulation of a container flow in real time using the detected container loading in the incoming region of the transport section and a transport speed,

the simulation comprising:

entering said detected value for the container loading into a shift register (SR1); and synchronizing a shift register clock with the transport speed, so that the shift register content (DW0, DW1, ...) represents the container loading on the transport section, wherein the shift register comprises a plurality of differently clocked shift registers (SR1, SR2, SR3) corresponding to the number of partial sections (T1, T2, T3), and wherein the clocks of the differently clocked shift registers (SR1, SR2, SR3) are synchronized with the transport speeds of the partial sections (T1, T2, T3), **characterized in that** transport section comprises several individually speed-controlled consecutive partial sections (T1, T2, T3),

the method further comprising:

calculating a virtual representation of a container loading at a transfer point (Ü1, Ü2) between two adjacent partial sections by calculating a virtual position and an arrival time of one or several containers at the transfer point (Ü1, Ü2), and shifting the virtual representation at the transfer point (Ü1, Ü2) to a following shift register of the subsequent partial section of the transport section.

2. The method according to claim 1, wherein simulation furthermore comprises:

associating a path section on the partial transport section (T1, T2, T3) with the shift register clock depending on transport speed.

3. The method according to claim 1 or 2, wherein a container loading and/or a container distance is/are calculated from the shift register contents (DW0, DW1, ...).

4. The method according to one of claims 1 - 3, wherein a container throughput is calculated from the shift register contents (DW0, DW1, ...) and the transport speeds of the partial sections.

5. The method according to one of claims 1 - 4, wherein the transport speeds of the partial sections (T1, T2, T3) are controlled such that a given container throughput, a given container loading and/or a given container distance are achieved.

6. The method according to claim 1, wherein during a shift from a last storage cell (DW10) of a preceding shift register (SWR1), storage content of the last storage cell (DW10) is added to the storage content of a first storage cell (DWX+0) of a subsequent shift register (SWR2) to simulate a transfer from a partial section (T1) to a subsequent partial section (T2).

7. The method according to one of claims 1 - 6, furthermore comprising the visualization of the loading of the transport section and/or its change in time.

8. The method according to one of claims 1 - 7, furthermore comprising the simulation of a virtual back pressure switch, wherein a virtual back pressure is calculated for a particular storage cell that corresponds with a particular location on the transport section from a container density and the transport speeds of the respective partial sections as well as the adjacent partial sections.

9. The method according to claim 8, wherein the virtual back pressure switch changes the transport speed of one or several partial sections, such that the loading density falls below a predetermined value corresponding to a predetermined storage cell of a shift register.

10. The method according to one of claims 1 - 9, furthermore comprising: detecting the container loading over a certain region at an outgoing region (E2) of the transport section which is preferably arbitrarily selectable.

11. The method according to one of claims 1 - 10, wherein the detection of the container loading comprises:

cyclically detecting the container loading at the incoming region of the transport section over a path section corresponding to the shift register clock.

12. The method according to claim 11, wherein the container loading is detected with a camera.

13. The method according to claim 11, wherein the container loading is detected on a single-track partial section with a light barrier.

**Revendications**

1. Procédé de surveillance et de commande d'un degré d'occupation d'un parcours de transport dans une installation de remplissage, qui comprend les étapes suivantes :

relevé d'une occupation en contenants sur une zone déterminée dans une zone d'entrée (E1) du parcours de transport ;
simulation d'un flux de contenants en temps réel en utilisant l'occupation en contenants relevée dans la zone d'entrée du parcours de transport et une vitesse de transport,
la simulation comprenant :

l'introduction de la valeur relevée pour l'occupation en contenants, dans un registre à décalage (SR1) ; et
la synchronisation d'une cadence de registre à décalage avec la vitesse de transport, de sorte que le contenu de registre à décalage (DW0, DW1, ...) reproduit l'occupation en contenants sur le parcours de transport, le registre à décalage englobant une pluralité de registres à décalage (SR1, SR2, SR3) pouvant être cadencés de manière différente, conformément au nombre des parcours partiels (T1, T2, T3), et les cadences des registres à décalage (SR1, SR2, SR3) pouvant être cadencés de manière différente étant synchronisées avec les vitesses de transport des parcours partiels (T1, T2, T3), **caractérisé en ce que** le parcours de transport comprend plusieurs parcours partiels (T1, T2, T3) raccordés mutuellement et pouvant être régulés individuellement en vitesse,

le procédé comprenant en outre :

le calcul d'une représentation virtuelle d'une occupation en contenants au niveau d'un dispositif de transfert (Ü1, Ü2) entre deux parcours partiels adjacents, par calcul d'une position virtuelle et d'un temps d'arrivée d'un ou de plusieurs contenants au niveau du dispositif de transfert (Ü1, Ü2), et la transmission de la représentation virtuelle au niveau du dispositif de transfert (Ü1, Ü2), à un registre à décalage suivant du parcours partiel suivant du parcours de transport.

**2.** Procédé selon la revendication 1, d'après lequel la simulation comprend en outre :

l'association d'un chemin de transport sur le parcours partiel de transport (T1, T2, T3) à la cadence de registre à décalage, en fonction de la vitesse de transport.

**3.** Procédé selon la revendication 1 ou la revendication 2, d'après lequel à partir du contenu de registre à décalage (DW0, DW1, ...), on calcule une occupation en contenants et/ou une distance d'espacement de contenants.

**4.** Procédé selon l'une des revendications 1 - 3, d'après lequel à partir du contenu de registre à décalage (DW0, DW1, ...) et des vitesses de transport des parcours partiels, on calcule un débit de contenants.

**5.** Procédé selon l'une des revendications 1 - 4, d'après lequel les vitesses de transport des parcours partiels (T1, T2, T3) sont régulées de manière à obtenir un débit de contenants prédéterminé, une occupation en contenants prédéterminée et/ou une distance d'espacement prédéterminée des contenants.

**6.** Procédé selon la revendication 1, d'après lequel lors du report d'une dernière cellule de mémorisation (DW10) d'un registre à décalage (SWR1) précédent, son contenu de mémoire est additionné au contenu de mémoire d'une première cellule de mémoire (DWX+0) d'un registre à décalage (SWR2) directement suivant, pour simuler un transfert d'un premier parcours partiel (T1) sur un parcours partiel (T2).

**7.** Procédé selon l'une des revendications 1 - 6, qui comprend par ailleurs, la visualisation de l'occupation du parcours de transport et/ou de sa variation dans le temps.

**8.** Procédé selon l'une des revendications 1 - 7, qui comprend par ailleurs, la simulation d'un commutateur de pression dynamique d'accumulation, virtuel, et d'après lequel, à partir d'une densité de contenants et des vitesses de transport du parcours partiel respectivement correspondant ainsi que des parcours partiels adjacents, on calcule pour une cellule de mémoire déterminée, qui correspond à un endroit déterminé sur le parcours de transport, une pression dynamique d'accumulation virtuelle.

**9.** Procédé selon la revendication 8, d'après lequel le commutateur de pression dynamique d'accumulation fait varier la vitesse de transport d'un ou de plusieurs parcours partiels de manière telle, que la densité d'occupation tombe sous une valeur prédéterminée, conformément à une cellule de mémoire prédéterminée d'un registre à décalage.

**10.** Procédé selon l'une des revendications 1 - 9, qui comprend par ailleurs : le relevé de l'occupation en contenants sur une zone déterminée au niveau d'une zone de sortie (E2) du parcours de transport, qui peut être choisie librement.

**11.** Procédé selon l'une des revendications 1 - 10, d'après lequel le relevé de l'occupation en contenants comprend :

le relevé cyclique de l'occupation en contenants au niveau de la zone d'entrée du parcours de transport, sur un trajet du parcours, qui correspond à la cadence du registre à décalage.

12. Procédé selon la revendication 11, d'après lequel l'occupation en contenants est relevée à l'aide d'une caméra.

13. Procédé selon la revendication 11, d'après lequel l'occupation en contenants est relevée sur un parcours partiel à une seule piste, à l'aide d'une barrière photoélectrique.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0071955 A
- EP 0066119 A
- EP 0190090 A
- DE 3313030 A1